# EUROPEAN PATENT APPLICATION

(11) **EP 2 068 422 A1**
(43) Date of publication of application: **10.06.2009**
(21) Application number: 08253902.4
(22) Date of filing: 05.12.2008
(51) Int. Cl.: H02J 7/34, H02J 7/00

(54) **Serial stage power supply combination for emergency auxiliary charging apparatus**

(30) Priority: 06.12.2007 US 987945
(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

An improved emergency auxiliary power supply comprises a rechargeable secondary battery, a super capacitor or any other type of storage with the capacity equal to or smaller than the load voltage to function as an emergency charging source; a conduction train, an optional charging control circuit and another optional first storage unit comprised of a diode on the output side to prevent inverse voltage and connected to a second storage in the load coupled to the output are provided to comprise a lighter, easy to carry, and for emergency use DC power supply system allowing flexible combination with at least two stages for serial stage power supply.

## Description

### BACKGROUND OF THE INVENTION

### (a) Field of the Invention

The present invention is related to a serial stage power supply combination for emergency auxiliary charging apparatus, and more particularly, to an improved combination for emergency auxiliary charging and various applied circuits.

### (b) Description of the Prior Art:

A single voltage source is available as a charging source in conventional storage as a charging apparatus for a charging source.

### SUMMARY OF THE INVENTION

The primary purpose of the present invention is to provide an improved emergency auxiliary power supply comprised of a rechargeable secondary battery, a super capacitor, or any other type of storage with the capacity equal to or smaller than load voltage to form an emergency charging source of the emergency auxiliary power supply. A conduction train for charging purpose, an optional charging control circuit and another optional first storage unit comprised of a diode on the output side to prevent inverse voltage and connected to a second storage in the load coupled to the output are provided to comprise a lighter, easy for carry, and for emergency use DC power supply system allowing flexible combination with at least two stages for serial stage power supply.

### BRIEF DESCRIPTION OF THE DRAWINGS

Fig. 1 is a block chart showing a preferred embodiment of an improved serial stage power supply combination for an emergency auxiliary charging apparatus of the present invention.
Fig. 2 is a block chart showing an applied circuit of the present invention, wherein, the charging source is supplying power to the emergency auxiliary power supply of the present invention and the emergency auxiliary power supply is charging the storage in the load unit, or is supplying power to the load unit at the same time.
Fig. 3 is a block chart showing another applied circuit of the present invention, wherein, the emergency auxiliary power supply is charging the storage in the load unit, or is supplying power to the load unit at the same time.
Fig. 4 is a block chart showing another applied circuit yet of the present invention, wherein, the load is driven by the power from the storage.
Fig. 5 is a block chart showing another applied circuit yet of the present invention, wherein, the charging source input is charging the storage in the load unit and is supplying power to the load unit at the same time.
Fig. 6 is a block chart showing that a control and a protection for outputted voltage and amperage are added to the emergency auxiliary power supply of the present invention.
Fig. 7 is a bioc chart showing a circuit structure of coupling the output of the emergency auxiliary power supply of the present invention to a separately provided conduction train by means of a conductor.

### LISTING OF COMPONENT AND CORRESPONDING LABEL

- 100:: charging source
- 101:: emergency auxiliary power supply
- 102, 103:: conduction train
- 104:: load unit
- 105:: rechargeable device
- 106:: rechargeable device disposed at the load unit
- 107, 109, 111, 112:: pin
- 108:: charging control circuit
- 110:: separation diode
- 113:: load
- 114:: over-current breaker
- 115:: limiting protection
- 116:: current detection circuit
- 117:: switch
- 118:: voltage detection and display circuit
- 119:: central controller
- 120:: housing

### DETAILED DESCRIPTION OF THE PREFERRED EMBODIMENTS

In the improved serial stage power supply combination for emergency auxiliary charging of the present invention, the emergency auxiliary power supply is comprised of a rechargeable secondary battery, a super capacitor or any other type of storage with the capacity equal to or smaller than load voltage to form an emergency charging source of the emergency auxiliary power supply. A conduction train for charging purpose is provided. An optional charging control circuit and a diode to prevent inverse voltage on the output side are provided to form a first storage unit, which replaces the conventional disposal primary battery, to further form a DC power supply system with a secondary storage in the load coupled to the output. The system, lighter, easy for carry, and for emergency use, contains at least two stages of rechargeable secondary battery or other rechargeable storage allowing flexible combination to execute serial stage power supply.

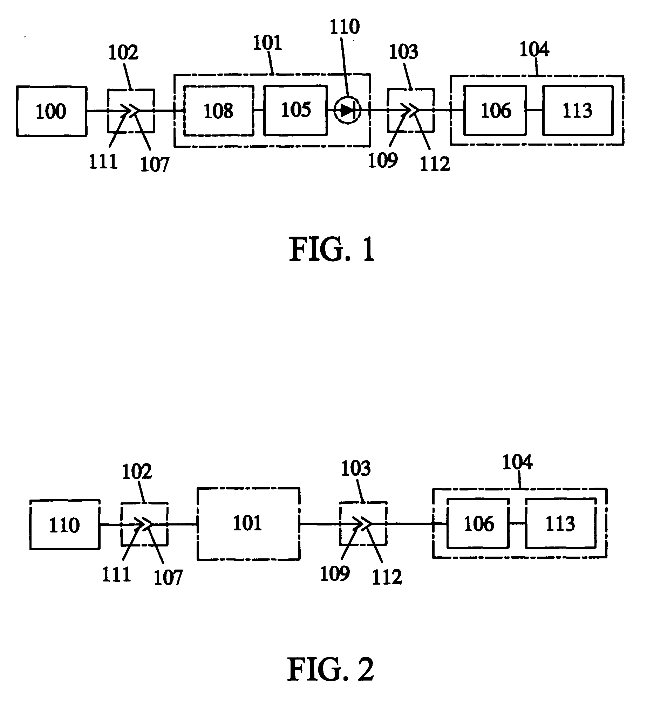

Fig. 1 shows a block chart of a preferred embodiment of the present invention. Wherein, a DC power supply system allowing flexible combination of serial stage power supply by means of at least two stages of a rechargeable secondary battery or other type of storage is essentially comprised of:
- a charging source 100: related to a DC source or a DC source converted from rectified AC to charge the emergency auxiliary power supply 101 or to charge the secondary rechargeable storage in the load, or to supply power to the load;
- a conduction train 102: related to a conduction train of specific structure to execute positive-to-positive and negative-to-negative coupling for separated cut-off or incorporated conduction; and configured in plug and socket structure or that similar to an incorporation structure by insertion to transmit power from the charging source 100 to the emergency auxiliary power supply 101;
- another conduction train 103: related to a conduction train of specific structure to execute positive-to-positive and negative-to-negative coupling for separated cut-off or incorporated conduction; and configured in plug and socket structure or that similar to an embedded incorporation structure to transmit power from the emergency auxiliary power supply 101 to the load unit 104;
- the emergency auxiliary power supply 101: comprised of rechargeable secondary battery, super capacitor or other storage 105, having a capacity equal to or smaller than that of another storage 106 in the load unit 104 and its charging input being directly connected to a pin 107 from the conduction train 102, or as required a charging control circuit 108 being provided between the charging input and the pin 107; its output being directly connected to a pin 109 from another conduction train 103, or as required a separation diode 110 being provided between the output and the pin 109; a corresponding pin 111 to the pin 107 being conducted to the charging source 100 and a corresponding pin 112 to the pin 109 being conducted to the load unit 104;
- a charging control circuit 108: related to a mechanic-electronic or solid state electronic device to fully or partially control charging current, voltage and charging time;
- a separation diode 110: one or more than one diode element connected in series or serial-parallel between the emergency auxiliary power supply 101 and its output, or one or more than one diode connected in series or series-parallel to regulate the output voltage of the emergency auxiliary power supply 101 by means of its positive drop as required; and
- the load unit 104: including a rechargeable storage 106 comprised a rechargeable secondary battery, super capacitor other storage device, incorporated to a communication, information, home electric appliance, personal electric appliance, instrument, power tool and any other load 113 driven by the load unit 104.

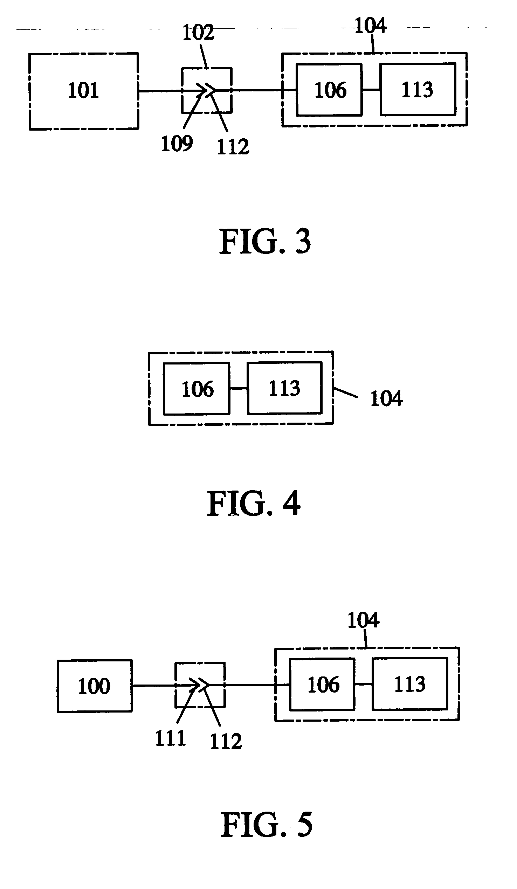

Applied combinations of the improved serial stage power supply combination for the emergency auxiliary charging apparatus of the present invention include:
(1) As illustrated in Fig. 2, the charging source 100 supplies power to the emergency auxiliary power supply 101, in turn, the rechargeable storage 105 in the emergency auxiliary power supply 101 charges the storage 106 in the load unit 104 or supplies power to the load 113 at the same time;
(2) As illustrated in Fig. 3, the rechargeable storage 105 in the emergency auxiliary power supply 101 is charging another storage 106 in the load unit 104 or is supplying power to the load 113 at the same time;
(3) As illustrated in Fig. 4, the load 113 is driven by power supplied from the rechargeable storage 106 in the load unit 104; and
(4) As illustrated in Fig. 5, the input of the charging source 100 is charging the rechargeable storage 106 in the load unit 104 and is supplying power to the load 113.

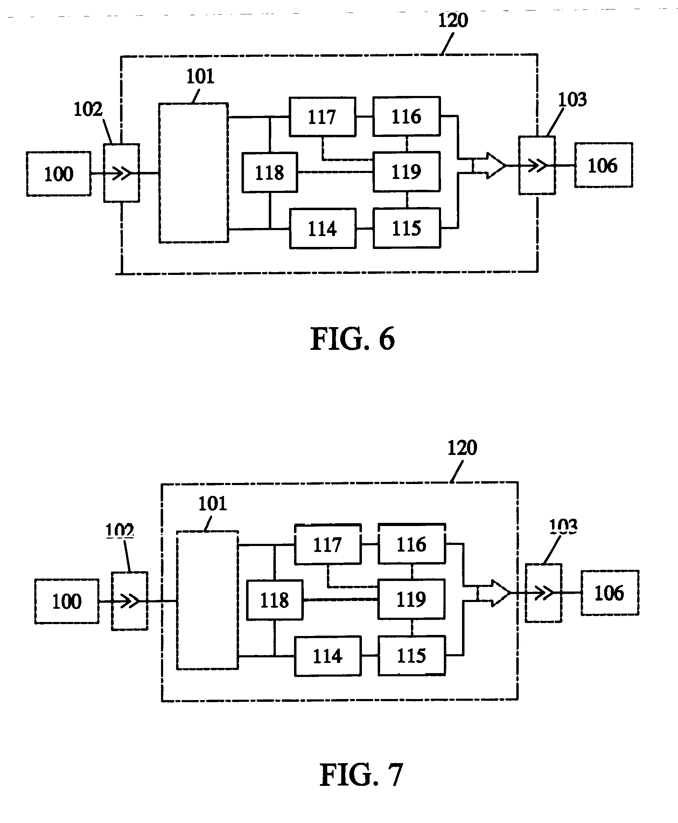

Additionally, voltage and current control and protection devices are provided between the emergency auxiliary power supply 101 and the conduction train 103 as required as illustrated in the circuit block chart in Fig. 6. Wherein, those control and protection devices for current and voltage outputted from the emergency auxiliary power supply 101 are essentially comprised of:
- the emergency auxiliary power supply 101: comprised of rechargeable secondary battery, super capacitor or other storage 105, having a capacity equal to or smaller than that of another storage 106 in the load unit 104 and its charging input being directly connected to a pin 107 from the conduction train 102, or as required a charging control circuit 108 being provided between the charging input and the pin 107; its output being directly connected to a pin 109 from another conduction train 103, or as required a separation diode 110 being provided between the output and the pin 109;
- a conduction train 102: related to a conduction train of specific structure to execute positive-to-positive and negative-to-negative coupling for separated cut-off or incorporated conduction; and configured in plug and socket structure or that similar to an incorporation structure by insertion to transmit power from the charging source 100 to the emergency auxiliary power supply 101;
- another conduction train 103: related to a conduction train of specific structure to execute positive-to-positive and negative-to-negative coupling for separated cut-off or incorporated conduction; and configured in plug and socket structure or that similar to an embedded incorporation structure to transmit power from the emergency auxiliary power supply 101 to the load unit 104;
- an over-current breaker 114: alternatively, a short fuse, or a mechanic-electronic or solid-state electronic current breaker connected in series with the source is or is not added to where between the emergency auxiliary power supply 101 and its output interface conduction train 103;
- a limiting protection 115: alternatively, a limiting protection with it resistance changing in proportion with the amperage, comprised of a positive temperature coefficient (PTC) resistor, resistance device, mechanic-electronic, or solid-state electronic device connected in series with the source is or is not added to where between the emergency auxiliary power supply 101 and its output interface conduction train 103;
- a current detection circuit 116: an optional circuit provided between the output of the emergency auxiliary power supply 101 and its output interface conduction train 103 connected in parallel with the source; related to an analog or digital current detection device comprised of a mechanic-electronic, or solid state electronic device, or an output current detection device indicator, or a detection circuit provided to control analog or digital voltage signal references, or a display being further included;
- a switch 117: an optional provided between the output of the emergency auxiliary power supply 101 and its output interface conduction train 103 connected in series with the source; related to a switch operated by manual, a solid switch operated by signal, or a switch control circuit;
- a voltage detection and display circuit 118: an optional circuit provided at the output of the emergency auxiliary power supply 101 and connected in parallel with the source; related to an analog or digital voltage detection and display device comprised of a mechanic-electronic, or solid state electronic device, or an output voltage detection device indicator, or a detection and display device provided to control analog or digital voltage signal references for detecting and displaying the voltage value of the rechargeable device 105, or for displaying the capacity value of the rechargeable device 105 corresponding to the voltage value;
- a central controller 119: also an optional to be provided at the output of the emergency auxiliary power supply 101 to control the limiting protection or the switch and cause the limiting protection to increase resistance for inhibiting the amperage in case of over-current by referring to the outputted amperage; and control the switch to cut off the output once the amperage reaches the preset value; and
- a housing 120: made of insulation material, or non-insulation material lined inside with insulation material, accommodating and being integrated with all those devices described above.

Furthermore, as illustrated in Fig. 7, both of the conduction trains 102 and 103 are separated from the input and output of the emergency auxiliary power supply 101, and are connected to the emergency auxiliary power supply 101 by a conductor, or a second unit of plug and socket. Fig. 7 shows a block chart of a circuit structure, wherein, a conductor is used to couple the output of the emergency auxiliary power supply to the conduction train separately provided.

As disclosed above, an improved emergency auxiliary power supply charging apparatus of the present invention by further including a rechargeable secondary battery, a super capacitor or any other type of storage with the capacity equal to or smaller than the load voltage to form an emergency charging source of the emergency auxiliary power supply; a conduction train for charging purpose; an optional charging control circuit and a diode to prevent inverse voltage on the output side to form a first storage unit which replaces the conventional disposal primary battery, and to further form with a secondary storage in the load coupled to the output a lighter, easy to carry, and for emergency use DC power supply system containing at least two stages of rechargeable secondary battery or other rechargeable storage allowing flexible combination to execute serial stage power supply; is innovative with precise function. Therefore, this application is duly filed accordingly.

The invention also provides an improved serial stage power supply combination for an emergency auxiliary power supply (101), comprised of a rechargeable secondary battery, a super capacitor or any other type of rechargeable storage (105) with a capacity equal to, or smaller than the load (104) voltage to form an emergency charging source of the emergency auxiliary power supply.

A conduction train (102) may be provided for charging purposes, and an optional charging control circuit (108) and a separation diode (110) for preventing inverse voltage on the output side may be provided to form a first storage unit, which replaces the conventional disposal primary battery.

A secondary storage (106) may be provided in the load (104), thereby providing a lighter, easy to carry emergency use DC power supply system containing at least two stages of rechargeable secondary battery or other rechargeable storage, allowing flexible combination to execute serial stage power supply.

Preferably, a charging source (100) is provided, the charging device being a DC source or a DC source converted from rectified AC to charge the emergency auxiliary power supply (101) or to charge the secondary rechargeable storage (106) in the load (104), or to supply power to the load.

A conduction train (102) may be provided, the conduction train having a specific structure to execute positive-to-positive and negative-to-negative coupling for separated cut-off or incorporated conduction.

The conduction train (102) may be configured in a plug-and-socket structure, or in an incorporation structure for insertion to transmit power from the charging source (100) to the emergency auxiliary power supply (101).

A second conduction train (103) may be provided, having a specific structure to execute positive-to-positive and negative-to-negative coupling for separated cut-off or incorporated conduction.

The second conduction train (103) may be configured in a plug-and-socket structure, in an incorporation structure for transmitting power from the emergency auxiliary power supply (101) to the load (104).

The emergency auxiliary power supply (101) may be a rechargeable secondary battery, a super capacitor or other rechargeable storage (105), having a capacity equal to, or smaller than, that of the secondary rechargeable storage (106) in the load (104) with its charging input being directly connected to a connection (107) from the conduction train (102).

A charging control circuit (108) may be provided between the charging input and the connector (107), its output being directly connected to a connector (109) to the second train (103).

A separation diode (110) may be provided between the output and the connector (109), a corresponding connector (111) to the connector (107) being connected to the charging source (100), and a corresponding connector (112) to the connector (109) being conducted to the load (104).

The charging control circuit (108) may be a mechanic-electronic or solid state electronic device for fully or partially controlling charging current, voltage and charging time.

The separation diode (110) may be one or more than one diode element connected in series or serial-parallel between the emergency auxiliary power supply (101) and its output, or one or more than one diode may be connected in series or series-parallel to regulate the output voltage of the emergency auxiliary power supply (101) by means of its positive drop.

The load (104) may include a rechargeable storage (106) comprising a rechargeable secondary battery, a super capacitor other unchargeable storage device, incorporated to a communications device, an information device, a home electric appliance, a personal electric appliance, an instrument, a power tool or any other load (113) driven by the load (104)

## Claims

1. An improved serial stage power supply combination for emergency auxiliary power supply, comprised of a rechargeable secondary battery, a super capacitor or any other type of storage with the capacity equal to or smaller than the load voltage to form an emergency charging source of the emergency auxiliary power supply; a conduction train for charging purpose; an optional charging control circuit and a diode to prevent inverse voltage on the output side are provided to form a first storage unit, which replaces the conventional disposal primary battery, to further form with a secondary storage in the load coupled to the output a lighter, easy to carry and for emergency use DC power supply system containing at least two stages of rechargeable secondary battery or other rechargeable storage allowing flexible combination to execute serial stage power supply. essentially comprised of:
- a charging source (100): related to a DC source or a DC source converted from rectified AC to charge the emergency auxiliary power supply (101) or to charge the secondary rechargeable storage in the load, or to supply power to the load;
- a conduction train (102): related to a conduction train of specific structure to execute positive-to-positive and negative-to-negative coupling for separated cut-off or incorporated conduction; and configured in plug and socket structure or that similar to an incorporation structure by insertion to transmit power from the charging source (100) to the emergency auxiliary power supply (101);
- another conduction train (103): related to a conduction train of specific structure to execute positive-to-positive and negative-to-negative coupling for separated cut-off or incorporated conduction; and configured in plug and socket structure or that similar to an embedded incorporation structure to transmit power from the emergency auxiliary power supply (101) to the load unit (104);
the emergency auxiliary power -supply (101): comprised of rechargeable secondary battery, super capacitor or other storage (105), having a capacity equal to or smaller than that of another storage (106) in the load unit (104) and its charging input being directly connected to a pin (107) from the conduction train (102), or as required a charging control circuit (108) being provided between the charging input and the pin (107); its output being directly connected to a pin (109) from another conduction train (103), or as required a separation diode (110) being provided between the output and the pin (109); a corresponding pin (111) to the pin (107) being conducted to the charging source (100) and a corresponding pin (112) to the pin (109) being conducted to the load unit (104);
- a charging control circuit (108): related to a mechanic-electronic or solid state electronic device to fully or partially control charging current, voltage and charging time;
- a separation diode (110): one or more than one diode element connected in series or serial-parallel between the emergency auxiliary power supply (101) and its output, or one or more than one diode connected in series or series-parallel to regulate the output voltage of the emergency auxiliary power supply (101) by means of its positive drop as required; and
- the load unit (104): including a rechargeable storage (106) comprised a rechargeable secondary battery, super capacitor other storage device, incorporated to a communication, information, home electric appliance, personal electric appliance, instrument, power tool and any other load (113) driven by the load unit (104).

2. An improved serial stage power supply combination for emergency auxiliary power supply as claimed in Claim 1, wherein, the charging source the charging source (100) supplies power to the emergency auxiliary power supply (101), in turn, the rechargeable storage (105) in the emergency auxiliary power supply (101) charges the storage (106) in the load unit (104) or supplies power to the load (113) at the same time.

3. An improved serial stage power supply combination for emergency auxiliary power supply as claimed in Claim 1, wherein the rechargeable storage (105) in the emergency auxiliary power supply (101) is charging another storage (106) in the load unit (104) or is supplying power to the load (113) at the same time.

4. An improved serial stage power supply combination for emergency auxiliary power supply as claimed in Claim 1, wherein, the load (113) is driven by power supplied from the rechargeable storage (106) in the load unit (104).

5. An improved serial stage power supply combination for emergency auxiliary power supply as claimed in Claim 1, wherein, the input of the charging source (100) is charging the storage (106) in the load unit (104) and supplying power to the load (113) at the same time.

6. An improved serial stage power supply combination for emergency auxiliary power supply as claimed in Claim 1, wherein, voltage and current control and protection devices are provided between the emergency auxiliary power supply (101) and the conduction train (103) essentially comprised of:
- the emergency auxiliary power supply (101): comprised of rechargeable secondary battery, super capacitor or other storage (105), having a capacity equal to or smaller than that of another storage (106) in the load unit (104) and its charging input being directly connected to a pin (107) from the conduction train (102), or as required a charging control circuit (108) being provided between the charging input and the pin (107); its output being directly connected to a pin (109) from another conduction train (103), or as required a separation diode (110) being provided between the output and the pin (109);
- a conduction train (102): related to a conduction train of specific structure to execute positive-to-positive and negative-to-negative coupling for separated cut-off or incorporated conduction; and configured in plug and socket structure or that similar to an incorporation structure by insertion to transmit power from the charging source (100) to the emergency auxiliary power supply (101);
- another conduction train (103): related to a conduction train of specific structure to execute positive-to-positive and negative-to-negative coupling for separated cut-off or incorporated conduction; and configured in plug and socket structure or that similar to an embedded incorporation structure to transmit power from the emergency auxiliary power supply (101) to the load unit (104);
- an over-current breaker (114): alternatively, a short fuse, or a mechanic-electronic or solid-state electronic current breaker connected in series with the source is or is not added to where between the emergency auxiliary power supply (101) and its output interface conduction train (103);
- a limiting protection (115): alternatively, a limiting protection with it resistance changing in proportion with the amperage, comprised of a positive temperature coefficient (PTC) resistor, resistance device, mechanic-electronic, or solid-state electronic device connected in series with the source is or is not added to where between the emergency auxiliary power supply (101) and its output interface conduction train (103);
- a current detection circuit (116): an optional circuit provided between the output of the emergency auxiliary power supply (101) and its output interface conduction train (103) connected in parallel with the source; related to an analog or digital current detection device comprised of a mechanic-electronic, or solid state electronic device, or an output current detection device indicator, or a detection circuit provided to control analog or digital voltage signal references, or a display being further included;
- a switch (117): an optional provided between the output of the emergency auxiliary power supply (101) and its output interface conduction train (103) connected in series with the source; related to a switch operated by manual, a solid switch operated by signal, or a switch control circuit;
- a voltage detection and display circuit (118): an optional circuit provided at the output of the emergency auxiliary power supply (101) and connected in parallel with the source; related to an analog or digital voltage detection and display device comprised of a mechanic-electronic, or solid state electronic device, or an output voltage detection device indicator, or a detection and display device provided to control analog or digital voltage signal references for detecting and displaying the voltage value of the rechargeable device (105), or for displaying the capacity value of the rechargeable device (105) corresponding to the voltage value;
- a central controller (119): also an optional to be provided at the output of the emergency auxiliary power supply (101) to control the limiting protection or the switch and cause the limiting protection to increase resistance for inhibiting the amperage in case of over-current by referring to the outputted amperage; and control the switch to cut off the output once the current reaches the preset value; and
- a housing (120): made of insulation material, or non-insulation material lined inside with insulation material, accommodating and being integrated with all those devices described above.

7. An improved serial stage power supply combination for emergency auxiliary power supply as claimed in Claim 6, both of the conduction trains (102) and (103) are separated from the input and output of the emergency auxiliary power supply (101), and are connected to the emergency auxiliary power supply (101) by a conductor, or a second unit of plug and socket.

8. Apparatus for supplying power to an emergency auxiliary power supply (101), the apparatus comprising:
a rechargeable device (105);
a charging source (100) for charging the emergency auxiliary power supply (101) or for charging a secondary rechargeable storage (106) in a load (104), or for supplying power to the load;
a first conduction train (102) for transmitting power from the charging source to the emergency auxiliary power supply; and
a second conduction train (103) for transmitting power from the emergency auxiliary power supply to the load.

9. Apparatus as claimed in claim 8, wherein the emergency auxiliary power supply (101) includes a rechargeable secondary battery, a super capacitor or other rechargeable storage (105), having a capacity equal to, or smaller than, that of the secondary rechargeable storage (106), the charging input of the auxiliary power supply being directly connected to an output connector (107) from the conduction train (102), the output of the auxiliary power supply being directly connected to an input connector (109) to the second conduction train (103), a connector (111) corresponding to the output connector (107) being connected to the charging source (100), and a connector (112) corresponding to the input connector (109) being connected to the load (104).

10. Apparatus as claimed in claim 9, wherein a charging control circuit (108) is provided between the charging output of the rechargeable storage (105) and the output connector (107), and a separation diode (110) is provided between the output of the rechargeable storage (105) and the input connector (109).

11. Apparatus as claimed in claim 9 or claim 10, wherein the charging control circuit is a mechanic-electronic or solid state electronic device for fully or partially controlling charging current, voltage and charging time.

12. Apparatus as claimed in any one of claims 9 to 11, wherein the separation diode (110) is constituted by one or more then one diode element connected in series, or in series-parallel, between the emergency auxiliary power supply (101) and its output; or by one or more than one diode connected in series or series-parallel for regulating the output voltage of the emergency auxiliary power supply (101) by means of a positive drop.

13. Apparatus as claimed in any one of claims 9 to 12, wherein the secondary rechargeable storage (106) comprises a rechargeable secondary battery, a super capacitor, another rechargeable storage device.

14. Apparatus as claimed in claim 13, wherein the rechargeable storage device (105) is associated with a communications device, an information device, a home electric appliance, a personal electric appliance, an instrument, a power tool or any other load (113) driven by the load (104).

15. An emergency auxiliary power supply comprising a charging source (100), a rechargeable secondary storage device (105) having a storage capacity equal to, or smaller than, the storage capacity of a load (104), thereby to function as an emergency charging source, and a conduction train (102) between the charging source and the storage device.
